# EUROPEAN PATENT APPLICATION

(11) **EP 1 912 107 A1**
(43) Date of publication of application: **16.04.2008**
(21) Application number: 06781607.4
(22) Date of filing: 25.07.2006
(51) Int. Cl.: G06C 5/00

(54) **RUNNING POSITION TRANSMITTING SYSTEM, RUNNING POSITION TRANSMITTING METHOD, BETTING SLIP RESELLING SYSTEM, AND BETTING SLIP RESELLING METHOD**

(30) Priority: 26.07.2005 JP 2005215370
(71) Applicant: Softbank BB Corp., Tokyo 105-7304 (JP)
(72) Inventor: SON, Masayoshi, Minato-ku Tokyo 106-0041 (JP)
(74) Representative: Grünecker, Kinkeldey, Stockmair & Schwanhäusser Anwaltssozietät
(86) International application number: PCT/JP2006/314695
(87) International publication number: WO 2007/013470

(57) **Abstract**

A horse race ticket the resale of which has been registered is displayed along with the situations before and during the race on a terminal 2 of each user through a server device 3 after the resale of the horse race ticket is registered. Each user determines the amount of money for which the user wants to buy a horse race ticket the resale of which has been registered and transmits it to the server device 3. The server device 3 computes the resale price in real time from the expected payoff of the horse race ticket announced by the horse race promoter and the amount of money for which each user wants to buy the horse race ticket and transmits the resale price to the terminal 2 of each user. The resale price varies in real time with the progress of the race, and each user determines the amount of money for which the user wants to buy the horse race ticket while viewing the varying resale price and transmits the amount of money. The server device 3 ends the reception of the amount of money for which the user wants to buy the horse race ticket when the race finishes and informs the user who has resold the horse race ticket and the user who has bought it of the finally computed resale price and so forth. With this, a system for auctioning a horse race ticket justly bought from the horse race promoter is provided.

## Description

### TECHNICAL FIELD

The present invention relates to a running position transmitting system which can be effectively applied to a live race broadcasting service for broadcasting horse racing, bicycle racing, motorboat racing, auto racing and so forth, and a running position transmitting system, a running position transmitting method, a betting slip reselling system and a betting slip reselling method for making it possible to resell betting slips of horse racing, bicycle racing, motorboat racing, auto racing and so forth.

### Background Art

Nowadays, authorized promoters have publicly organized public racings such as horse racing, bicycle racing, motorboat racing, auto racing and so forth. When such a publicly organized racing is hosted, betting slips go on sale in advance of starting a race. Fans purchase favorite betting slips after examining the conditions of race horses and horsemen while confirming the expected payoffs and the like.

The progress of the race is broadcasted by television or radio broadcasting, so that even fans living far from the race venue can be informed of the progress and outcome of the race through the television or radio broadcasting. When the race is finished, the promoter calculates final dividends and provides payoffs on the basis of the proceeds from sale, the number of betting slips as sold and so forth.

In this connection, Japanese Patent Published Application No. 2002-63306 (Patent Document 1) discloses a race betting system in which it is possible to confirm the betting of the race, minimize the chance of occurring errors, getting latest information such as expected payoffs and the like on a real time base, and bet the race without leaving any location.

The race betting system is implemented with a betting management server which is connected to mobile communication terminals through a communication line. The mobile communication terminal includes a betting information display unit for displaying betting information which is transmitted from the betting management server, and a unit for making a bet on the basis of the betting information which is displayed. The betting management server includes a betting information database for storing the betting information, a betting information providing unit for providing said mobile communication terminal with this betting information, an acceptance determination unit for receiving bets from the user, and determining whether or not each bet is acceptable, and a communication unit for transmitting the determination of whether or not the bet is acceptable to the mobile communication terminal of the user.

In accordance with this type of the race betting system, since a bet can be made anywhere as long as radio waves can reach, the user-friendliness can be enhanced, and it is possible to make a bet with reference to the betting information displayed on the betting information display unit by sight without resorting to hearing as in accordance with a telephone betting system, so that the reliability of betting can be improved as compared to direct betting or telephone betting.

However, in many cases, the live race broadcasts through the television or radio broadcasting have been centered on popular race horses and popular horsemen, or race horses and horsemen in foremost positions. Contrary to this, a fan usually wants to watch a race with a central focus on the race horses and horsemen he has betted. Every fan gives attention to different race horse and horseman. Because of this, there is a problem in that it is difficult to satisfy each fan by live broadcasts of racing centered on popular or leading horses and horsemen.

Also, in recent years, some fans want to buy resale betting slips which have been properly purchased from the promoter. If the resale of betting slips becomes possible on a real time base while the race is in progress, it is possible to provide new enjoyment to fans, increase the sales of betting slips, and contribute revitalization. Patent Document 1: Japanese Patent Published Application No. 2002-63306 (pages 6 to 8: Fig. 1)

### DISCLOSURE OF THE INVENTION

The present invention is invented taking into consideration the above problems. It is an object of the present invention to provide a running position transmitting system, a running position transmitting method, a betting slip reselling system and a betting slip reselling method in which live broadcast of racing can be centered on the race horse and horseman to which each fan pays attention, and it is possible to resell the betting slip on a real time base in accordance with the progress of the race.

In accordance with the present invention, when one or more desired running object is designated from among a plurality of running objects through a running object designation unit, a transmission unit transmits at least the running position and running object identification information corresponding to the running object designated through the running object designation unit from among the running positions and running object identification information of the running objects detected by the running object detecting unit. Then, a display control unit receives the running position and running object identification information of the designated running object which are transmitted from the transmission unit, and displays indication of the running position and running object identification information of the designated running object. By this process, since the running position of the running object each fan desires can be transmitted, even if each fan pays attention to a different running object, it is possible to perform live broadcasting the race while satisfying the respective fans. Incidentally, when the running position of the running object is displayed, the lap time or the like calculated from differential running positions can be also displayed.

Also, in accordance with the present invention, the transmission unit transmits not only the running position and running object identification information of the designated running object but also the running position and running object identification information of the running objects running within the certain distance range from the designated running object, and the display control unit displays the running positions of the respective running objects. By this process, since the running position of the running object designated by each fan is displayed as a center together with the running positions of the running objects running around the designated running object, it is possible to make each fan know the progress of the racing centered on the running object to which the each fan pays attention.

Also, in accordance with the present invention, the transmission unit creates and transmits "the image of the running track on which the running objects are running", and also creates "the image of the designated running object" or "the image of the designated running object and the images of the running objects running around the designated running object" and transmits the images of these running objects together with the running positions of these running objects. Then, on the display control unit side, while the image of the running track as transmitted from the transmission unit is displayed, the images of these running objects are displayed in the display position on this running track corresponding to the running position of the designated running object and the running positions of the running objects running around the designated running object. By this process, since the display control unit displays the respective images as they are received from the transmission unit without change, it is possible to substantially lessen the processing load such as the image processing load on said display control unit. Also, the running positions of the running objects can be displayed by the use of images, so that the situation can be easily understood.

Furthermore, in accordance with the present invention, on the display control unit side, while the image of the running track on which the running objects are running is created and displayed on the display unit, the image of the designated running object is created on the basis of the running object identification information of the designated running object received from the transmission unit, and the image of the designated running object is displayed in the display position on this running track corresponding to the running position received by the transmission unit.

Alternatively, on the display control unit side, while the image of the running track on which the running objects are running is created and displayed on the display unit, the image of the designated running object and the images of the running objects running within a certain distance range from this designated running object are created on the basis of the running object identification information of these running objects received from the transmission unit, and the images of these running objects are displayed in the display position on this running track corresponding to the running positions received by the transmission unit. It is possible to display the running positions of the running objects in an easy way to understand by displaying the images of the running track and running objects.

Still further, in accordance with the present invention, the running object detecting unit receives the running object identification information which is transmitted from the transmitter unit attached to each running object by a running position detecting unit, and transmits the running object identification information as received to the transmission unit together with the running position information indicative of the running positions, wherein the running position detecting unit is located in each of the running positions on the running track on which the running objects are running, and receives the running object identification information which is transmitted from the transmitter unit attached to the each running object. By this process, the running positions of the respective running objects can be accurately detected when each running object passes across the position where the running object is installed.

Still further, in accordance with the present invention, the user who want to resell a betting slip which is purchased from a promoter transmits betting slip resale information through a betting slip resale information transmission unit. A resale registration unit stores the betting slip resale information as transmitted from the user in a storage unit in order to perform resale registration for registering the betting slip for resale.

The running object detecting unit detects the running positions of a plurality of running objects and running object identification information uniquely assigned to each of the running objects, and a transmission unit transmits the betting slip resale information stored in the storage unit together with the running positions and running object identification information of the running objects detected by the running object detecting unit.

The display control unit displays the running track on which the running objects are running on the display unit, displays indication of the running positions of the respective running objects in the display positions on this running track corresponding to the running positions of the respective running objects on the basis of the running positions and running object identification information of the respective running objects as transmitted from the transmitter unit, and displays indication of the betting slips the resale of which has been registered on the basis of the betting slip resale information.

Before starting the race and after starting the race until the running objects reach a predetermined position (goal or X meters before the goal), the user who wants to purchase the betting slips the resale of which has been registered inputs a suggested purchase price for which the user wants to buy the betting slip which is one of the betting slips the resale of which has been registered, and transmits the suggested purchase price to the transmission unit through a suggested purchase price transmission unit.

A resale price calculation unit accepts the suggested purchase price before the running objects reach the predetermined position, calculates in real time the resale prices of the betting slips the resale of which has been registered on the basis of the purchase suggested price as accepted and the expected payoff of this betting slip which is wanted for purchase, and transmit the information on the resale prices.

The display control unit also displays the information on the resale prices. This resale price information is calculated and delivered on a real time base, and thereby the resale price information displayed on the display control unit is varying on a real time base in accordance with the progress of the race. The user who wants to purchase the betting slip for resale adjusts the suggested price for purchase with reference to this resale price information varying on a real time base, and transmits the adjusted suggested price for purchase.

When the running objects reach the predetermined position, the resale price calculation unit stops accepting the suggested prices for purchase. A notification unit notifies the resale price which is finally calculated by the resale price calculation unit to the user who want to resell the betting slip and the user who want to purchase the betting slip for resale. By this process, it is possible to resell the betting slip on a real time base in accordance with the progress of the race.

Still further, in accordance with the present invention, the transmission unit transmits at least the running position and running object identification information corresponding to the running object designated through the running object designation unit from among the running positions and running object identification information of the running objects detected by the running object detecting unit together with the betting slip resale information stored in the storage unit. By this configuration, each fan can consider the purchase of a betting slip for resale and a desired suggested price for purchasing the betting slip while confirming the running position of the desired running object.

Still further, in accordance with the present invention, the transmission unit transmits not only the running position and running object identification information of the designated running object but also the running position and running object identification information of the running objects running within the certain distance range from the designated running object, and the display control unit displays the running positions of the respective running objects. By this configuration, it is possible to consider the purchase of a betting slip for resale and a desired suggested price for purchasing the betting slip while confirming the running position of the designated running object and the running positions of the running objects running around the designated running object.

Also, in accordance with the present invention, the transmission unit creates and transmits "the image of the running track on which the running objects are running", and also creates "the image of the designated running object" or "the image of the designated running object and the images of the running objects running around the designated running object" and transmits the images of these running objects together with the running positions of these running objects. Then, on the display control unit side, while the image of the running track as transmitted from the transmission unit is displayed, the images of these running objects are displayed in the display position on this running track corresponding to the running position of the designated running object and the running positions of the running objects running around the designated running object. By this process, since the display control unit displays the respective images as they are received from the transmission unit without change, it is possible to substantially lessen the processing load such as the image processing load on said display control unit. Also, the running positions of the running objects can be displayed by the use of images, so that the situation can be easily understood, and each fan can consider the purchase of a betting slip for resale and a desired suggested price for purchasing the betting slip on the basis of the images.

Still further, in accordance with the present invention, on the display control unit side, while the image of the running track on which the running objects are running is created and displayed on the display unit, the image of the designated running object is created on the basis of the running object identification information of the designated running object received from the transmission unit, and the image of the designated running object is displayed in the display position on this running track corresponding to the running position received by the transmission unit.

Alternatively, on the display control unit side, while the image of the running track on which the running objects are running is created and displayed on the display unit, the image of the designated running object and the images of the running objects running within a certain distance range from this designated running object are created on the basis of the running object identification information of these running objects received from the transmission unit, and the images of these running objects are displayed in the display position on this running track corresponding to the running positions received by the transmission unit. It is possible to display the running positions of the running objects in an easy way to understand by displaying the images of the running track and running objects, and each fan can consider the purchase of a betting slip for resale and a desired suggested price for purchasing the betting slip on the basis of the images.

Still further, in accordance with the present invention, the running object detecting unit receives the running object identification information which is transmitted from the transmitter unit attached to each running object by a running position detecting unit, and transmits the running object identification information as received to the transmission unit together with the running position information indicative of the running positions, wherein the running position detecting unit is located in each of the running positions on the running track on which the running objects are running, and receives the running object identification information which is transmitted from the transmitter unit attached to the each running object. By this process, the running positions of the respective running objects can be accurately detected when each running object passes across the position where the running object is installed. Because of this, it is possible to transmit the accurate positions of the respective running objects on a real time base.

### BRIEF DESCRIPTION OF THE DRAWINGS

[Fig. 1] A block diagram for showing a horse race ticket reselling system in accordance with an embodiment of the present invention.
[Fig. 2] A view for showing the configuration of a running position transmitting system which is used for the horse race ticket reselling system of the embodiment.
[Fig. 3] A view for showing an example of the installation of the running position transmitting system which is used for the horse race ticket reselling system of the embodiment.
[Fig. 4] A block diagram for showing an identification number transmitter provided in the running position transmitting system which is used for the horse race ticket reselling system of the embodiment.
[Fig. 5] A block diagram for showing a measurement processing unit of a signal receiver provided in the running position transmitting system which is used for the horse race ticket reselling system of the embodiment.
[Fig. 6] A view for explaining resale prices which are varying in accordance with the progress of a race and displayed on a terminal device side of the horse race ticket reselling system of the embodiment.
[Fig. 7] A view for explaining the images of race horses displayed on a terminal device side of the horse race ticket reselling system of the embodiment.

### BEST MODE FOR CARRYING OUT THE INVENTION

An embodiment of the present invention will be explained in conjunction with the accompanying drawings. In the case of the present embodiment, the present invention is applied to a system for reselling betting slips of horse racing (horse race tickets).

### (System Configuration of Reselling Betting Slips)

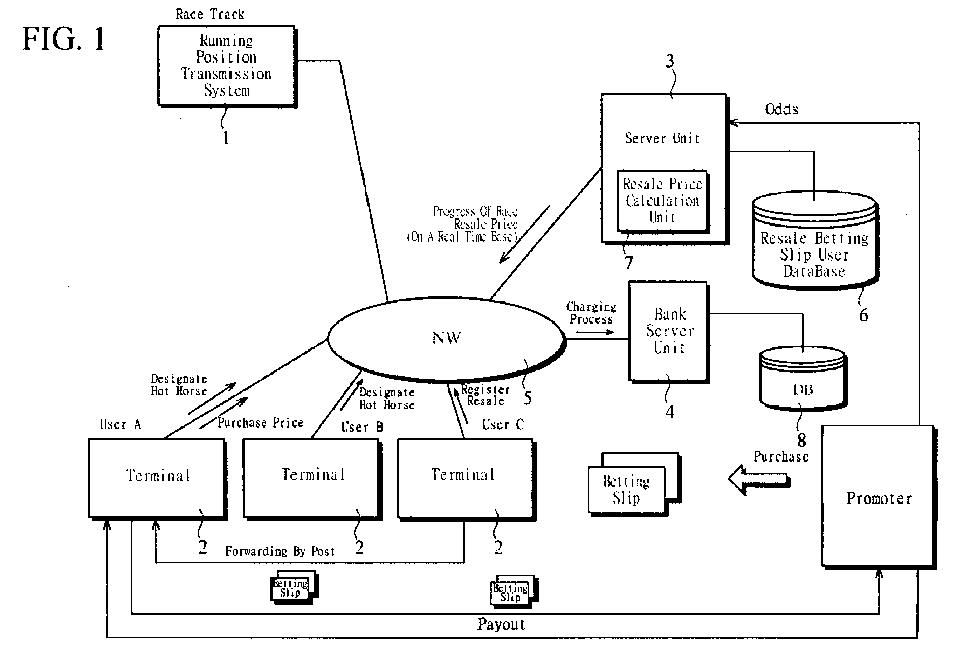

As illustrated in Fig. 1, the horse race ticket reselling system in accordance with the present embodiment includes a predetermined network 5 such as the Internet or a radio communication network through which are connected, with each other, a running position transmitting system 1 which detects the running positions of race horses and transmits the running positions on a real time base, terminal devices 2 of respective users, a server unit 3 dedicated to the horse race ticket reselling system and a server unit 4 of a bank which is used by each user.

The terminal device 2 of each user may be a personal computer, a cellular phone, a PHS (personal handy phone system), a PDA (Personal Digital Assistant) or the like.

The server 3 on this system side is a Web server which is implemented with a server computer or software capable of transmitting network content such as HTML (HyperText Markup Language) files, image files, music files and the like as WWW (World Wide Web) documents, and serves to accumulate information such as HTML files and image files and transmit the information in response to a request from client software such as a Web browser through an IP network such as the Internet. Also, this server unit 3 is provided with a database 6 in which are stored the information about horse race tickets the resale of which has been registered, and the user information including the residences, names, email addresses, bank account numbers and so forth of the users who want to resell horse race tickets and the users who want to purchase the horse race tickets for resale.

Incidentally, as explained below, the server unit 3 on this system serves to receive the running positions of race horses transmitted from the running position transmitting system, and transmit the running positions to the terminal devices 2 of the respective users on a real time base. In addition to this, this system is provided with a resale price calculation unit 7 which calculates the resale prices of the horse race tickets the resale of which has been registered on a real time base, and also transmits the resale prices to the terminal devices 2 of the respective users.

The bank server unit 4 is also provided with a database 8 in which are stored the user information including the residences, names, email addresses, bank account numbers and so forth of the users who possess accounts of the bank. The database 8 of this bank server unit 4 is accessed by the server unit 3 on the system side, for example, at the end of every month, and the charges for using the system are withdrawn from the bank accounts of the respective users.

### (Configuration of Running Position Transmission System)

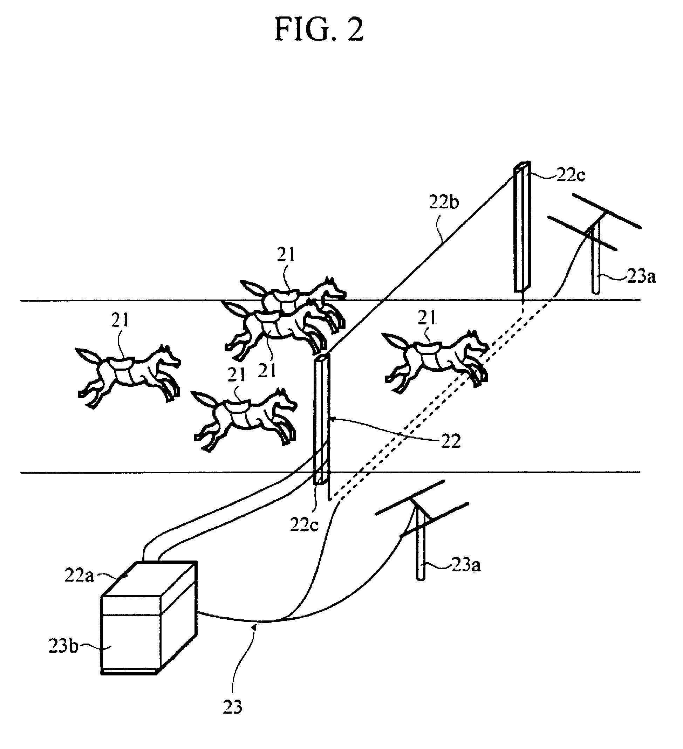

As illustrated in Fig. 2, the running position transmitting system 1 includes an identification number transmitter 21 attached to each of the race horses or horsemen for transmitting an identification number assigned to this each race horse, and a trigger signal generation unit 22, and a signal receiver 23.

The trigger signal generation unit 22 includes a signal generation unit 22a and a loop antenna 22b for transmitting a trigger signal. The loop antenna 22b is installed in the form of a loop which is buried in the ground between the tips of a pair of posts 22c standing on the opposite sides of the running track.

Alternatively, the loop antenna can be installed in order that it is looped between the posts or in the ground. Also, the trigger signal can be transmitted by the use of an electromagnet, a ultrasonic wave oscillator or the like. Namely, the loop antenna can be installed in any fashion as long as there is a narrow area in which all the race horses can receive the trigger signal.

The signal receiver 23 includes receiving antennas 23a and a measurement processing unit 23b. The receiving antennas 23a are located opposite to each other in the vicinity of the trigger signal generation unit 22 such that the running track is located therebetween.

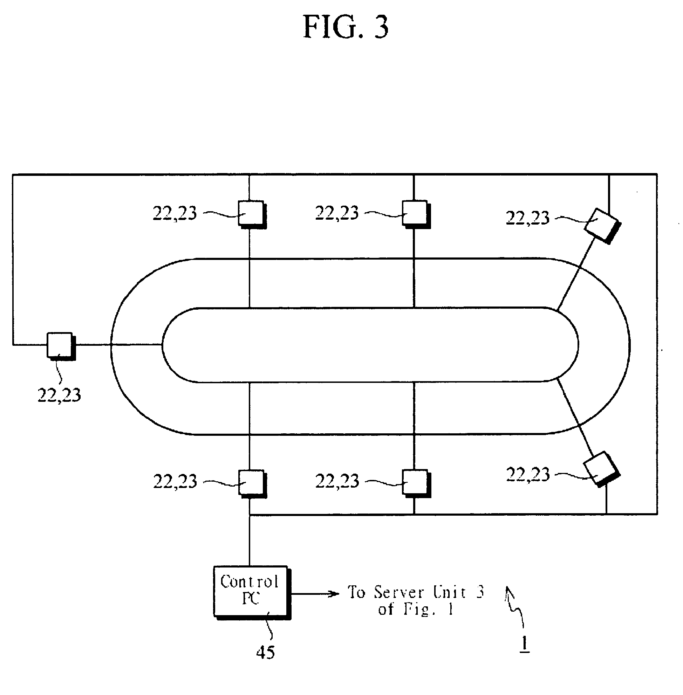

Furthermore, as illustrated in Fig. 3, the trigger signal generation unit 22 and the signal receiver 23 are installed at predetermined intervals, for example, at intervals of 5 meters, 10 meters or the like from the starting position to the goal position (G).

The signal generation unit 22a of the trigger signal generation unit 22 serves to continuously output trigger signals at a low frequency, for example, at several hundreds kHz. The loop antennas 22b are provided beside the running track such that the corresponding measurement position is located therebetween in order to transmit a trigger signal to the narrow area in the running direction. When a race horse crosses over the trigger signal transmission area, the identification number transmitter 21 attached to this race horse detects the trigger signal and transmit the identification number thereof.

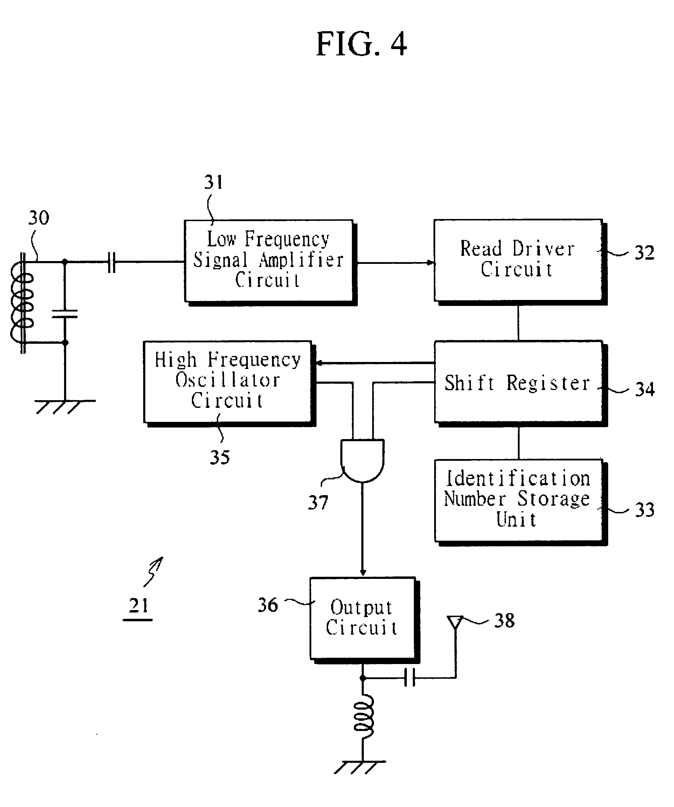

Fig. 4 is a circuit diagram showing the identification number transmitter 21. As illustrated in Fig. 4, the receiving antenna 30 is constructed to receive a trigger signal from the trigger signal generation unit 22, and a low frequency signal amplifier circuit 31 is provided for amplifying signals in the frequency range of this trigger signal in order to actuate a read driver circuit 32. When the read driver circuit 32 is actuated by the trigger signal, an identification number signal is read from an identification number storage unit 33 through a shift register 34. The identification number signal as read out in this manner is combined with a high frequency signal from a high frequency oscillator circuit 35 by an AND gate 37, and transmitted from an output circuit 36 through a transmitter antenna 38.

The identification number signal which is transmitted from the transmitter antenna 38 is a very weak signal in a high frequency range, for example, several MHz to several hundreds MHz, preferably several tens MHz to several hundreds MHz.

Meanwhile, the identification number signal can be transmitted at a frequency range of several hundreds KHz or lower. If a low frequency range is used for transmitting the signal, there is an advantage that the power consumption is lowered. However, the identification number signal cannot be transmitted and received at a high speed so that it is difficult to measure times in units of 0.1 second or shorter units. In addition to this, it becomes sometimes impossible to receive a number of identification number signals at the same time. On the other hand, if a frequency range of giga Hz is used for transmitting the signal, it is possible to measure times with an extremely high degree of accuracy. However, the directivity is so high that the identification number signal can sometimes not be detected by the receiving antenna, and the power consumption has to be increased to generate a signal in a giga Hz frequency range.

If a frequency range of several tems MHz to several hundreds MHz, for example, 60 MHz is used for transmitting the signal, it is possible to measure times with an accuracy of the order of 0.01 second or shorter. The 0.01 second order accuracy is enough to measure the lap times when handling horses. The directivity is not so high. Furthermore, it is possible to minimize the energy consumption by making use of a very weak radio wave such that the identification number transmitter 21 can be made compact and light weighted. Needless to say, a frequency of the order of MHz or KHz can be used depending upon the object to be measured.

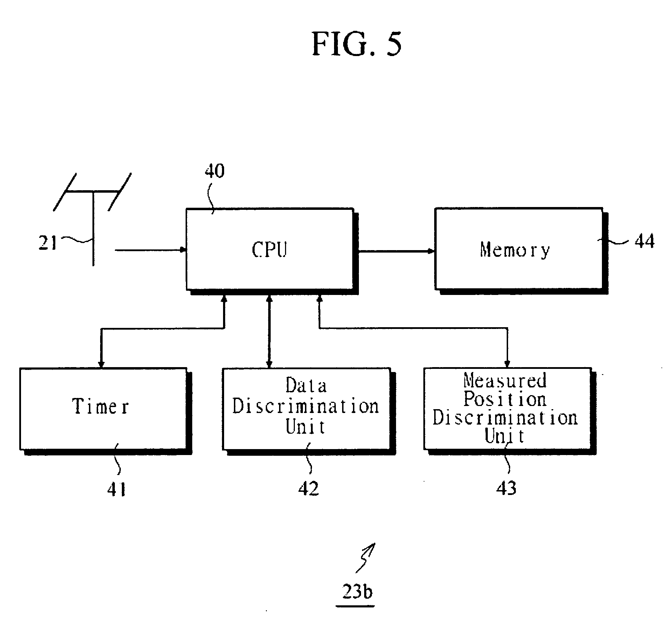

As illustrated in Fig. 5, the measurement processing unit 23b of the signal receiver 23 includes a CPU 40, a timer 41, a data discrimination unit 42, a measured position discrimination unit 43 and a memory 44. When receiving the identification number signal from the identification number transmitter 21 through the receiving antenna 23a, the measurement processing unit 23b reads an identification number by the data discrimination unit 42, detects the time of receiving the identification number signal on the basis of the measured time information obtained from the timer 41, reads a measured position discrimination signal from the measured position discrimination unit 43, and stores them in the memory 44. These identification number, the receiving time and the measured position discrimination signal stored in the memory 44 are input to a control personal computer 45 shown in Fig. 3, and transmitted to the server unit 3 on the system side by the control personal computer 45 through the network 5 shown in Fig. 1.

### (System Operation)

Next, the system operation of the horse race ticket reselling system constructed as described above will be explained.

### (1) User Registration

First, the user who wants to utilize the horse race ticket reselling system in accordance with this embodiment connects his terminal device 2 to the server unit 3 on the system side shown in Fig. 1, and registers himself by inputting the residence, name, desired password, account number of the bank for withdrawing the charges for using the system. When finishing this user registration process, the server unit 3 on the system side issues a user ID to the user for logging into the system, and registers the user information such as the residence, name, desired password, bank account number and the like which are input by the user in the database 6. By this process, the system becomes available for the user.

### (2) Live Broadcast of Race

First, in the case of the horse race ticket reselling system of this embodiment, when a race starts, the server unit 3 on the system side serves to deliver the running positions of the respective race horses to the terminal device 2 of the respective users on a real time base. Namely, after starting a race, as explained with reference to Fig. 2 and Fig. 3, when each race horse passes across the position where the trigger signal generation unit 22 is installed at predetermined intervals, the trigger signal transmitted from this trigger signal generation unit 22 is received by the receiving antenna 30 of the identification number transmitter 21 attached to the each race horses or horseman. When receiving this trigger signal, the identification number transmitter 21 transmits the identification number signal indicative of the identification number assigned to the each race horse.

The identification number signal as transmitted from the identification number transmitter 21 of the each race horse is received by the signal receiver 23 paired with the trigger signal generation unit 22, input to the control personal computer 45 as well as the information indicative of the time of receiving this identification number signal and the measured position discrimination signal which is read from the measured position discrimination unit 43, and transmitted to the server unit 3 on the system side by the control personal computer 45 through the network 5 shown in Fig. 1.

The server unit 3 on the system side detects the order of arrival and differential arrival times of the respective race horses with reference to the running positions indicated by the measured position discrimination signals on the basis of the information indicative of the identification numbers of the respective race horses and the times of receiving the respective identification number signals. In addition to this, the server unit 3 on the system side creates the image of the running track of the race and the images of the respective race horses. Then, additional information such as the lap times calculated on the basis of the order of arrival, differential arrival times and differential running positions of the respective race horses is associated with the above created images of the race horses respectively, and transmitted to the terminal devices 2 of the respective users logging into the system together with the running positions indicated by the measured position discrimination signals and the image of the running track.

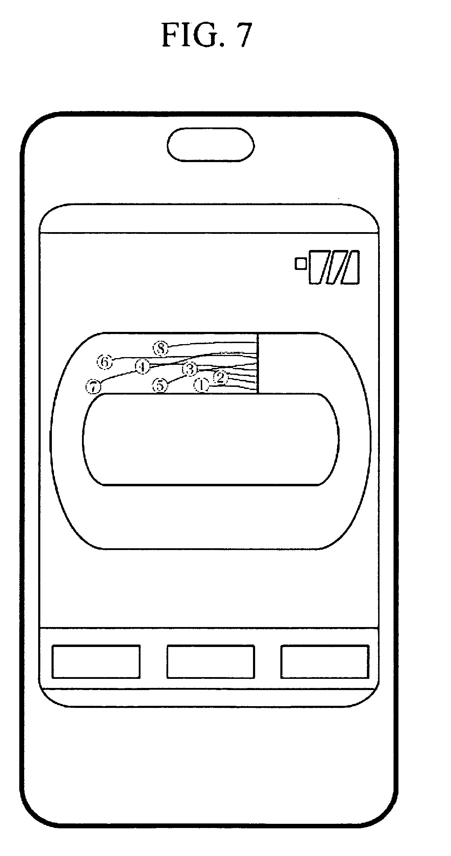

The terminal device 2 of each user displays the image of the running track transmitted from the server unit 3 on the system side as shown in Fig. 7, and displays the images, numbers and/or the like of the race horses in the display position on this running track corresponding to the running position indicated by the measured position discrimination signal on the basis of the order of arrival, differential arrival times and additional information of this each race horse. Incidentally, the images to be displayed can be images of race horses which are created by 3D CG (3D computer graphic) and arranged in the running order.

The additional information such as the running positions, running order, differential running times, lap times of the respective race horses on the running track is detected each time each race horse passes across the position where the trigger signal generation unit 22 is installed, and delivered to the terminal devices 2 of the respective users through the server unit 3 on the system side so that the running positions of the respective race horses are displayed on the terminal devices 2 of the respective users.

Meanwhile, while the images of the respective race horses or the like are created on the server unit 3 side on the system side and delivered to the terminal devices 2 of the respective users in the case of this example, the creation of the images of the respective race horses and the calculation of the additional information can be performed at each user end by the terminal device, on the basis of the running positions, running order and differential running times of the respective race horses on the running track which are delivered from the server unit 3 on the system side and received by the terminal device of the each user. Namely, the images of the respective race horses and the additional information can be generated and delivered on the server unit 3 side, or can be generated and displayed on the terminal device 2 side.

### (3) Designation of Race Horse

In the case of the horse race ticket reselling system according to this embodiment, it is possible to display, on the terminal device 2 side, the running position of only "the designated race horse" or the running positions of "the designated race horse and the race horses running ahead and behind the designated race horse".

In this case, the user connects own terminal device 2 to the server unit 3 on the system side, and select displaying the running position, additional information and the like of only "the designated race horse" or displaying the running positions, additional information and the like of "the designated race horse and the race horses running ahead and behind the designated race horse", while designating the unique number (horse number) assigned to the race horse to be designated.

When this selection and designation is made, the server unit 3 on the system side detects the race horse designated by the user on the basis of the unique number signal transmitted from the signal receiver 23 through the control personal computer 45. Then, when the user designates the running position of only "the designated race horse", the running position of the race horse designated by this user is transmitted to the terminal device 2 of this user. On the other hand, when the user designates the running position of only "the designated race horse and the race horses running ahead and behind the designated race horse", the running positions of the race horse designated by this user and the race horses running ahead and behind the designated race horse are transmitted to the terminal device 2 of this user.

By this configuration, the running position of only the race horse designated by this user or the running positions of the race horse designated by this user and the race horses running ahead and behind the designated race horse are displayed on the display unit of the terminal device 2 of the user. Because of this, live broadcast of racing can be centered on the race horse to which the each fan pays attention.

### (Resale of Betting Slips)

(1) Resale Registration of Betting Slips Next, in accordance with the horse race ticket reselling system of this embodiment, the user who has properly purchased a horse race ticket from the promoter of the horse race as illustrated in Fig. 1 can resell the purchased horse race ticket. For example, in the case where the user C shown in Fig. 1 wants to resell the horse race ticket purchased as described above, this user C connects own terminal device 2 to the server unit 3 on the system side, logs into the system on the basis of the user ID issued from the server unit 3 on the system side and the password designated by himself, and registers the horse race ticket for resale.

More specifically speaking, when registering the horse race ticket for resale, the user C inputs the race venue of the purchased horse race ticket, the race number, the bet type of the horse race ticket, the purchased horse race ticket and the purchase price. The server unit 3 on the system side registers as resale betting slip information the race venue, the race number, the bet type of the horse race ticket, the purchased horse race ticket and the purchase price, which are input, in the database 6. By this process, the registration of the resale of the horse race ticket is completed.

(2) Notification and Auction of Betting Slips the Resale of Which Has Been Registered
Next, after the registration of the resale of the horse race ticket, the server unit 3 on the system side delivers and notifies, to each user, the information about the horse race tickets the resale of which has been registered, before starting the race corresponding to the horse race ticket the resale of which has been registered until the race is finished (i.e., after starting selling the horse race ticket until the respective race horses start and enter the goal), and accepts applications for purchasing the horse race tickets the resale of which has been registered.

More specifically speaking, from before starting the race corresponding to the horse race ticket the resale of which has been registered and all through the race, the server unit 3 on the system side transmits, to the terminal devices 2 of the respective users, the information necessary for live broadcasting the race (i.e., the information about the running positions of the respective race horses and the like) as described above, while reading the information about the horse race tickets the resale of which has been registered in the database 6 and also transmits the information to the terminal devices 2 of the respective users. By this process, the view before starting the race (for example, the look of the paddocks) and the progress of the race are displayed on the display unit of the terminal devices 2 of the respective users, as well as the information about the horse race tickets for resale.

The user who wants to purchase some of the horse race tickets coming up for resale pays attention to the conditions of race horses in advance of the race, prospects which race horse is likely to win the race while monitoring the progress of the race, and confirm whether or not the horse race tickets listed for resale includes the horse race ticket corresponding to the race horse he prospects to win. Then, if the horse race tickets listed for resale includes the horse race ticket corresponding to the race horse he prospects to win, the user inputs a suggested price for purchasing the horse race ticket through the terminal device 2, and transmits the suggested price to the server unit 3 on the system side.

With respect to this suggested price for purchase, since the expected payoffs (odds) are announced in advance of starting a race, the respective users would input the suggested price for purchase determined with reference to the odds. In other words, when the odds of a certain horse race ticket announced by the promoter side is to get a 20 times return, this horse race ticket has a monetary value of about 2000 yen, although which is not fixed yet. For this reason, if the user bids a price higher than 2000 yen, it means a monetary loss to purchase the horse race ticket even when the horse race ticket can be purchased. Contrary to this, when the horse race ticket is purchased at a price lower than 2000 yen, it means a monetary benefit. Accordingly, the user who wants to purchase this horse race tickets thinks of the odds announced by the promoter side as the standard price of the horse race ticket, so that it will be common to input a price lower than the standard price, for example, 1000 yen or thereabout as the suggested price for purchase.

Meanwhile, for example, in the case of the retirement match of a popular race horse or popular horseman, the horse race ticket itself is considered valuable as a commemorative item irrespective of the payoff of the horse race ticket. In such a case, even if the expected payoff is 2000 yen, the suggested price for purchase as input could be higher than the expected payoff such as 3000 yen. Namely, with respect to the horse race tickets for resale, it will be noted that the suggested price for purchase can be determined by the respective users on a voluntary basis.

Next, the server unit 3 on the system side accepts the suggested prices for purchase transmitted from the respective users in this manner until the race is finished, and calculates the resale prices of the horse race tickets the resale of which has been registered, in the resale price calculation unit 7 shown in Fig. 1, by performing a predetermined arithmetic operation on the basis of these suggested prices for purchase as accepted, the expected payoff of this horse race ticket announced by the promoter side and so forth. This resale price information is then transmitted to the terminal devices 2 of the respective users.

The terminal devices 2 of the respective users display the information indicating the horse race tickets for resale and the resale prices of the horse race tickets for resale on the display unit together with the progress of the race. The calculation of the resale prices is performed by the resale price calculation unit 7 on a real time base until the race is finished. Accordingly, the terminal devices of the respective users 2 display the resale prices of the horse race tickets which are varying from moment to moment in response to the suggested prices for purchase as input by the respective users in accordance with the progress of the race.

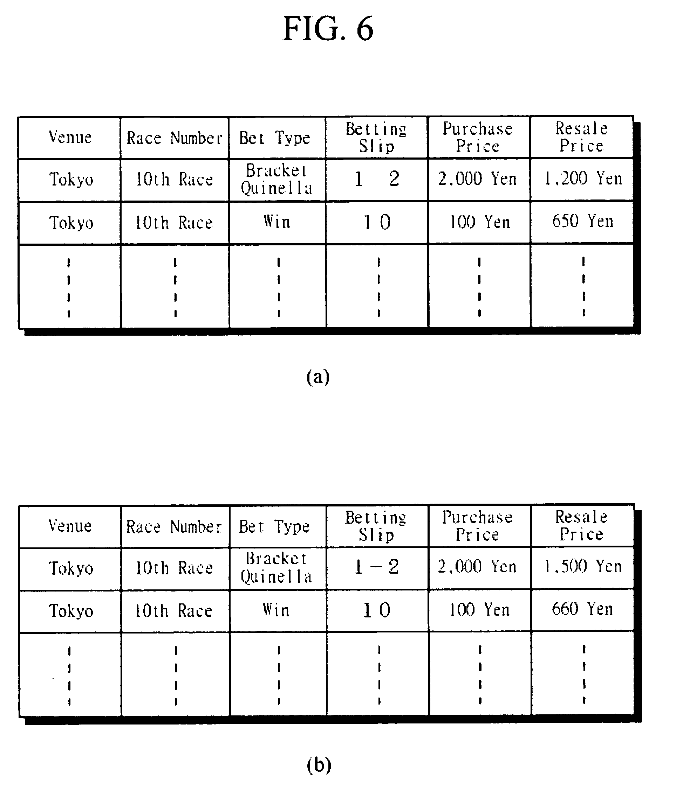

Fig. 6(a) and Fig. 6(b) show the resale prices of the horse race tickets which are varying from moment to moment in accordance with the progress of the race and displayed on the display units of the terminal devices 2 of the respective users. The example shown in Fig. 6(a) and Fig. 6(b) includes a horse race ticket of 2,000 yen for a bracket quinella of the 10th race on the combination of bracket number 1 and bracket number 2 has been registered for resale while the racecourse is the Tokyo Racecourse, and a horse race ticket of 100 yen for a win of the 10th race on the horse number 10 while the racecourse is the Tokyo Racecourse.

Then, the resale price of the horse race ticket for the bracket quinella on the combination of bracket number 1 and bracket number 2 varies from 1,200 yen to 1,500 yen as illustrated in Fig. 6(a). Also, the resale price of the horse race ticket for the win on the horse number 10 varies from 650 yen as illustrated in Fig. 6(b) to 660 yen as illustrated in Fig. 6(b).

The respective users who want to purchase the horse race tickets for resale input desired suggested prices for purchase by considering the resale prices which are varying from moment to moment while monitoring the view before starting the race and the progress of the race. No horse race ticket can be purchased from the promoter side after the closing time in advance of actually starting the race. However, in the case of the horse race ticket reselling system according to this embodiment, it is possible even after starting the race to purchase desired horse race tickets (= the above explained horse race tickets the resale of which has been registered) until the race is finished (or until just before finish). More specifically, even when the race horses are rounding the final turn, a desired horse race ticket can be purchased.

Next, when the race is finished, the server unit 3 on the system side stops accepting the suggested prices for purchase transmitted from the respective users. Then, an email message is delivered to the user having input the suggested price for purchase equal to the resale price which is finally calculated by the resale price calculation unit 7 to notify that "you succeeded in purchasing the horse race ticket" together with "the contact information of the user who is reselling the horse race ticket (residence, telephone number, email address and so forth)", while an email message is delivered to the user who is reselling the horse race ticket to notify that "the horse race ticket is resold" together with "the contact information of the user who wants to purchase the horse race ticket for resale".

The respective users who are notified by email get in contact with each other.
The delivery and receipt of the horse race ticket can be performed, for example, such that the user who wants to purchase the horse race ticket deposits the amount of money corresponding to the suggested price for purchase into the bank account of the user who is reselling the horse race ticket, and after confirming the receipt of the amount of money the horse race ticket is transmitted, for example by post, to the user who wants to purchase the horse race ticket. The resale of the horse race ticket is completed in this manner. Meanwhile, the user receiving the above horse race ticket (= the user purchased the horse race ticket) goes down to the encashment station on the promoter side to exchange the horse race ticket for money.

### (Advantages of Embodiment)

As apparent from the above explanation, in accordance with the horse race ticket reselling system of this embodiment, when designating one or more desired race horse through the terminal device 2 of the key, the server unit 3 on the system side transmits the running position and identification number of the designated race horse from among the running positions and identification numbers of the respective race horses which are detected by the running position transmitting system 1. Then, the terminal device 2 receives the running position and identification number of the designated race horse as transmitted from the server unit 3 on the system side, and displays the running position of the designated race horse. By this process, since the running position of the race horse each fan desires can be transmitted, even if each fan pays attention to a different race horse, it is possible to perform live broadcasting the race while satisfying the respective fans.

Also, the server unit 3 on the system side transmits not only the running position and identification number of the designated race horse but also the running positions and identification numbers of the race horses running within a certain distance range from this designated race horse, and the terminal device 2 displays the running positions of the respective race horses. By this process, since the running position of the race horse designated by each fan is displayed as a center together with the running positions of the race horses running around the designated race horse, it is possible to make each fan know the progress of the racing centered on the race horse to which the each fan pays attention.

Also, the server unit 3 on the system side creates and transmits "the image of the running track on which the race horses are running", and also creates "the image of the designated race horse" or "the image of the designated race horse and the images of the race horses running around the designated race horse" and transmits the images of these race horses together with the running positions of these race horses. Then, while the image of the running track as transmitted from the server unit 3 side is displayed on the terminal device 2 side, the images of these race horses are displayed in the display position on this running track corresponding to the running position of the designated race horse and the running positions of the race horses running around the designated race horse. By this process, since the terminal device 2 displays the respective images as they are received from the server unit without change, it is possible to substantially lessen the processing load such as the image processing load on said terminal device 2. Also, the running positions of the race horses can be displayed by the use of images, so that the situation can be easily understood.

Alternatively, on the terminal device 2 side, while the image of the running track on which the race horses are running is created and displayed, the image of the designated race horse is created on the basis of the identification number of the designated race horse received from the server unit 3 on the system side, and the image of the designated race horse is displayed in the display position on this running track corresponding to the running position received by the server unit 3.

Furthermore, on the terminal device 2 side, while the image of the running track on which the race horses are running is created and displayed, the image of the designated race horse and the images of the race horses running within a certain distance range from this designated race horse are created on the basis of the identification numbers of these race horses received from the server unit 3, and the images of these race horses are displayed in the display position on this running track corresponding to the running positions received by the server unit 3. It is possible to display the running positions of the race horses in an easy way to understand by displaying the images of the running track and race horses.

Furthermore, in accordance with the horse race ticket reselling system of this embodiment, the user who wants to resell a horse race ticket purchased from the promoter performs the registration of the resale of the horse race ticket in the server unit 3 on the system side. When starting the race, while the running position transmitting system 1 detects the identification numbers assigned respectively to a plurality of race horses together with the running positions of the respective race horses, the server unit 3 on the system side transmits, to the terminal devices 2 of the respective users, the information on the horse race tickets the resale of which has been registered together with the running positions and identification numbers of the respective race horses designated by this running position transmitting system 1.

The terminal device 2 displays the running track on which the race horses are running on the display unit, displays indication of the running positions of the respective race horses in the display positions on this running track corresponding to the running positions of the respective race horses on the basis of the running positions and identification numbers of the respective race horses as transmitted from the transmitter unit, and displays indication of the horse race tickets the resale of which has been registered.

Before the running race horses reach a predetermined position (goal or several meters before the goal), the user who wants to purchase the horse race tickets the resale of which has been registered inputs a suggested purchase price for which the user wants to buy the horse race ticket which is one of the horse race tickets the resale of which has been registered, and transmits the suggested purchase price to the server unit 3.

The resale price calculation unit 7 of the server unit 3 accepts the suggested prices for purchase as transmitted from the terminal devices 2 of the respective users before the running race horses reach the predetermined position, calculates in real time the resale prices of the horse race tickets the resale of which has been registered on the basis of these suggested prices for purchase as received and the expected payoff (odds) of this horse race ticket announced by the promoter side, and transmits the resale prices to the terminal devices 2 of the respective users.

The terminal device 2 also displays this resale price information. This resale price information is calculated and delivered on a real time base, and thereby the resale price information displayed on the terminal device 2 is varying on a real time base in accordance with the progress of the race. The user who wants to purchase the horse race ticket for resale adjusts the suggested price for purchase with reference to this resale price information varying on a real time base, and transmits the adjusted suggested price for purchase.

When the running race horses reach the predetermined position, the server unit 3 stops accepting the suggested prices for purchase. The server unit 3 notifies the resale price which is finally calculated by the resale price calculation unit 7 to the user who want to resell the horse race ticket and the user who want to purchase the horse race tickets for resale. By this process, it is possible to resell the horse race ticket on a real time base in accordance with the progress of the race.

### Industrial Applicability

In accordance with the running position transmitting system and method of the present invention, it is possible to perform live broadcast of racing centered on the race horse and horseman to which each fan gives attention. Also, in accordance with the betting slip reselling system and method of the present invention, it is possible to resell the betting slip on a real time base in accordance with the progress of the race.

## Claims

1. A running position transmitting system comprising:
a running object detecting unit operable to detect the running positions of a plurality of running objects and running object identification information uniquely assigned to each of the running objects;
a running object designation unit operable to designate one or more desired running object from among the plurality of the running objects;
a transmission unit operable to transmit at least the running position and running object identification information corresponding to the running object designated through said running object designation unit from among the running positions and running object identification information of the running objects detected by said running object detecting unit; and
a display control unit operable to receive the running position and running object identification information of a desired running object, which are transmitted from said transmission unit, by designating the desired running object through said running object designation unit, and display indication of the running position of the designated running object.

2. The running position transmitting system as claimed in claim 1 wherein
said transmission unit operable to transmit, from among the running position and running object identification information of the running objects detected by said running object detecting unit, the running position and running object identification information corresponding to the running object designated through said running object designation unit together with the running positions and running object identification information corresponding to the running objects running within a certain distance range from the running object designated through said running object designation unit, and wherein
said display control unit receives the running position and running object identification information corresponding to the designated running object and the running positions and running object identification information corresponding to the running objects running within the certain distance range from the designated running object, which are transmitted from said transmission unit, and displays the running position of the designated running object and the running positions of the running objects running within the certain distance range from the designated running object.

3. The running position transmitting system as claimed in claim 1 wherein
said transmission unit is operable to create the image of the running object corresponding to the running object identification information of the running object designated through said running object designation unit and the image of a running track on which the running objects are running, and transmit the images of the running object and running track together with the running position, or operable to create the image of the running object corresponding to the running object identification information of the running object designated through said running object designation unit and the images of the running objects corresponding to the running object identification information of the running objects running within the certain distance range from the designated running object together with the image of the running track on which the running objects are running, and transmit the images of the running objects and running track together with the respective running positions, and wherein
said display control unit is operable to display the image of the running track received from said transmission unit on the display unit, and display the image of the designated running object in the display position on the running track corresponding to the running position of the designated running object, or operable to display the image of the running track received from said transmission unit on the display unit, and display the images of the running objects in the display positions on the running track corresponding to the running position of the designated running object and the running positions of the running objects running within the certain distance range from the designated running object.

4. The running position transmitting system as claimed in claim 1 wherein
said display control unit is operable to create the image of the running track on which the running objects are running, display the image of the running track on the display unit, create the image of the designated running object on the basis of the running object identification information of the designated running object received from said transmission unit, and display the image of this running object in the display position on the running track corresponding to the running position received from said transmission unit, or operable to create the image of the running track on which the running objects are running, display the image of the running track on the display unit, create the image of the designated running object on the basis of the running object identification information of the designated running object received from said transmission unit and the images of the running objects in the display positions on the running track corresponding to the running positions of the running objects running within the certain distance range from the designated running object, and display the images of these running objects in the display positions on the running track corresponding to the running positions received from said transmission unit.

5. The running position transmitting system as claimed in claim 1 wherein said running object detecting unit comprising:
a transmitter unit attached to each of the running objects and operable to transmit the running object identification information; and
a running position detecting unit located in each of the running positions on the running track on which the running objects are running and operable to receive the running object identification information which is transmitted, when each of the running objects passes across the each position, from said transmitter unit attached to the each running object, and transmits the running object identification information as received to said transmission unit together with the running position information indicative of the running positions.

6. A running position transmitting method comprising:
a detecting step of detecting the running positions of a plurality of running objects and running object identification information uniquely assigned to each of the running objects by a running object detecting unit;
a running object designating step of designating one or more desired running object from among the plurality of the running objects through a running object designation unit;
a transmitting step of transmitting, by a transmission unit, at least the running position and running object identification information corresponding to the running object designated through said running object designation unit from among the running positions and running object identification information of the running objects detected by said running object detecting unit in said detecting step; and
a displaying step of receiving, by a display control unit, the running position and running object identification information of a desired running object which are transmitted from said transmission unit in said transmitting step by designating the desired running object through said running object designation unit in said running object designating step, and displaying indication of the running position of the designated running object.

7. The running position transmitting method as claimed in claim 6 wherein
in said transmitting step, said transmission unit transmits, from among the running position and running object identification information of the running objects detected by said running object detecting unit in said detecting step, the running position and running object identification information corresponding to the running object designated through said running object designation unit in said running object designating step together with the running positions and running object identification information of the running objects running within a certain distance range from the running object designated through said running object designation unit, and wherein
in said displaying step, said display control unit receives the running position and running object identification information corresponding to the designated running object and the running positions and running object identification information of the running objects running within the certain distance range from the designated running object, which are transmitted from said transmission unit, and displays the running position of the designated running object and the running positions of the running objects running within the certain distance range from the designated running object.

8. The running position transmitting method as claimed in claim 6 wherein
in said transmitting step, said transmission unit serves to create the image of the running object corresponding to the running object identification information of the running object designated through said running object designation unit in said running object designating step and the image of a running track on which the running objects are running, and transmit the images of the running object and running track together with the running position, or serves to create the image of the running object corresponding to the running object identification information of the running object designated through said running object designation unit in said running object designating step and the images of the running objects corresponding to the running object identification information of the running objects running within the certain distance range from the designated running object together with the image of the running track on which the running objects are running, and transmit the images of the running objects and running track together with the respective running positions, and wherein
in said displaying step, said display control unit serves to display the image of the running track received from said transmission unit in said transmitting step on the display unit, and display the image of the designated running object in the display position on the running track corresponding to the running position of the designated running object, or serves to display the image of the running track received from said transmission unit in said transmitting step on the display unit, and display the images of the running objects in the display positions on the running track corresponding to the running position of the designated running object and the running positions of the running objects running within the certain distance range from the designated running object.

9. The running position transmitting method as claimed in claim 6 wherein, in said displaying step, said display control unit serves to create the image of the running track on which the running objects are running, display the image of the running track on the display unit, create the image of the designated running object on the basis of the running object identification information of the designated running object received from said transmission unit in said transmitting step, and display the image of this running object in the display position on the running track corresponding to the running position received from said transmission unit, or serves to create the image of the running track on which the running objects are running, display the image of the running track on the display unit, create the image of the designated running object on the basis of the running object identification information of the designated running object received from said transmission unit in said transmitting step and the images of the running objects in the display positions on the running track corresponding to the running positions of the running objects running within the certain distance range from the designated running object, and display the images of these running objects in the display positions on the running track corresponding to the running positions received from said transmission unit.

10. The running position transmitting method as claimed in claim 6 wherein, in said detecting step, said running object detecting unit receives the running object identification information which is transmitted from said transmitter unit attached to each running object by a running position detecting unit, and transmits the running object identification information as received to said transmission unit together with the running position information indicative of the running positions, wherein said running position detecting unit is located in each of the running positions on the running track on which the running objects are running, and receives the running object identification information which is transmitted from said transmitter unit attached to the each running object.

11. A betting slip reselling system comprising:
a betting slip resale information transmission unit operable to transmit betting slip resale information for use in registering, for resale, a betting slip which is purchased from a promoter;
a storage unit operable to store the betting slip resale information, which is transmitted from said betting slip resale information transmission unit, in order to register the betting slip;
a running object detecting unit operable to detect the running positions of a plurality of running objects and running object identification information uniquely assigned to each of the running objects;
a transmission unit operable to transmit the betting slip resale information stored in said storage unit together with the running positions and running object identification information of the running objects detected by said running object detecting unit;
a suggested purchase price transmission unit operable to transmit, before the running objects reach a predetermined position, a suggested purchase price of a betting slip which is wanted for purchase from among the betting slips the resale of which has been registered;
a resale price calculation unit operable to accept the suggested purchase price which is transmitted through said suggested purchase price transmission unit before the running objects reach the predetermined position, calculates in real time the resale prices of the betting slips the resale of which has been registered on the basis of the purchase suggested price as accepted and the expected payoff of this betting slip which is wanted for purchase, and transmit the information on the resale prices;
a display control unit operable to display the running track on which the running objects are running, display indication of the running positions of the respective running objects in the display positions on this running track corresponding to the running positions of the respective running objects on the basis of the running positions and identification numbers of the respective running objects as transmitted from the transmitter unit, displays indication of the betting slips the resale of which has been registered on the display unit on the basis of the betting slip resale information as received from said transmission unit, and displays the information on the resale prices as received from said resale price calculation unit on the display unit; and
a notification unit operable to notify the resale price which is finally calculated by the resale price calculation unit to the user who want to resell the betting slip and the user who want to purchase the betting slip for resale.

12. The betting slip reselling system as claimed in claim 11 further comprising a running object designation unit operable to designate one or more desired running object from among the plurality of the running objects, wherein
said transmission unit transmits at least the running position and running object identification information corresponding to the running object designated through said running object designation unit from among the running positions and running object identification information of the running objects detected by said running object detecting unit, and the betting slip resale information stored in said storage unit.

13. The betting slip reselling system as claimed in claim 11 wherein
said transmission unit transmits the running position and running object identification information corresponding to the running object designated through said running object designation unit and the running positions and running object identification information of the running objects running within the certain distance range from the designated running object, from among the running positions and running object identification information of the running objects detected by said running object detecting unit, and wherein
said display control unit receives the running position and running object identification information corresponding to the designated running object and the running positions and running object identification information of the running objects running within the certain distance range from the designated running object, which are transmitted from said transmission unit, and displays the running position of the designated running object and the running positions of the running objects running within the certain distance range from the designated running object.

14. The betting slip reselling system as claimed in claim 11 wherein
said transmission unit is operable to create the images of the running objects corresponding to the running object identification information of the running objects detected by said running object detecting unit and the image of the running track on which the running objects are running and transmit the images of the running objects and the image of the running track together with the running position, or operable to create the image of the running object corresponding to the running object identification information of the running object designated by said running object designation unit and the image of the running track on which the running objects are running and transmit the image of this running object and the image of the running track together with the running position, or said transmission unit is operable to create the image of the running object corresponding to the running object identification information of the running object designated through said running object designation unit and the images of the running objects corresponding to the running object identification information of the running objects running within the certain distance range from the designated running object together with the image of the running track on which the running objects are running, and transmit the images of the running objects and running track together with the respective running positions, and wherein
said display control unit is operable to display the image of the running track received from said transmission unit on the display unit, and display the images of the running objects detected by said running object detecting unit in the display positions on the running track corresponding to the running positions of the running objects detected by said running object detecting unit, or operable to display the image of the running track received from said transmission unit on the display unit, and display the image of the designated running object in the display position on the running track corresponding to the running position of the running object designated by said running object designation unit, or said display control unit is operable to display the image of the running track received from said transmission unit on the display unit, and display the images of the running objects in the display positions on the running track corresponding to the running position of the designated running object and the running positions of the running objects running within the certain distance range from the designated running object.

15. The betting slip reselling system as claimed in claim 11 wherein
said display control unit is operable to create the image of the running track on which the running objects are running, display the image of the running track on the display unit, create the images of the running objects detected by said running object detecting unit on the basis of the running object identification information of the running objects detected by said running object detecting unit, and display the images of the running objects in the display positions on the running track corresponding to the running positions received from said transmission unit, or operable to create the image of the running track on which the running objects are running, display the image of the running track on the display unit, create the image of the designated running object on the basis of the running object identification information of the designated running object received from said transmission unit, or said display control unit is operable to create the image of the running track on which the running objects are running, display the image of the running track on the display unit, create the image of the designated running object on the basis of the running object identification information of the designated running object received from said transmission unit and the images of the running objects in the display positions on the running track corresponding to the running positions of the running objects running within the certain distance range from the designated running object, and display the images of these running objects in the display positions on the running track corresponding to the running positions received from said transmission unit.

16. The betting slip reselling system as claimed in claim 11 wherein said running object detecting unit comprising:
a transmitter unit attached to each of the running objects and operable to transmit the running object identification information; and
a running position detecting unit located in each of the running positions on the running track on which the running objects are running and operable to receive the running object identification information which is transmitted, when each of the running objects passes across the each position position, from said transmitter unit attached to the each running object, and transmits the running object identification information as received to said transmission unit together with the running position information indicative of the running positions.

17. A betting slip reselling method comprising:
a resale registration step of storing betting slip resale information for registering a betting slip for resale in a storage unit by a resale registration unit, wherein the betting slip resale information is transmitted from said betting slip resale information transmission unit, and the betting slip for resale is purchased from a promoter;
a running object detecting step of detecting, by a running object detecting unit, the running positions of a plurality of running objects and running object identification information uniquely assigned to each of the running objects;
a transmission step of transmitting the betting slip resale information stored in said storage unit in said resale registration step together with the running positions and running object identification information of the running objects detected by said running object detecting unit in said running object detecting step;
a suggested purchase price transmission step of transmitting, by a suggested purchase price transmission unit, a suggested purchase price of a betting slip which is wanted for purchase from among the betting slips the resale of which has been registered, before the running objects reach a predetermined position;
a resale price calculation step of accepting, by a resale price calculation unit, the suggested purchase price which is transmitted in said suggested purchase price transmission step before the running objects reach the predetermined position, calculates in real time the resale prices of the betting slips the resale of which has been registered on the basis of these purchase suggested prices as accepted and the expected payoff of this betting slip which is wanted for purchase, and transmit the information on the resale prices;
a display controlling step of displaying, by a display control unit, the running track on which the running objects are running, displaying indication of the running positions of the respective running objects in the display positions on this running track corresponding to the running positions of the respective running objects on the basis of the running positions and identification numbers of the respective running objects as transmitted in said transmission step, displaying indication of the betting slips the resale of which has been registered on the display unit on the basis of the betting slip resale information as transmitted in said transmission step, and displaying the information on the resale prices as transmitted in said resale price calculation step on the display unit; and
a notifying step of notifying the resale price which is finally calculated in said resale price calculation step to the user who want to resell the betting slip and the user who want to purchase the betting slips for resale.

18. The betting slip reselling method as claimed in claim 17 further comprising a step of designating, by a running object designation unit, one or more desired running object from among the plurality of the running objects, wherein
in said transmission step, said transmission unit transmits at least the running position and running object identification information corresponding to the running object designated in said running object designating step from among the running positions and running object identification information of the running objects detected in said running object detecting step, and the betting slip resale information stored in said storage unit.

19. The betting slip reselling method as claimed in claim 17 wherein
in said transmission step, said transmission unit transmits the running position and running object identification information corresponding to the running object designated in said running object designating step and the running positions and running object identification information of the running objects running within the certain distance range from the running object designated in said running object designating step, from among the running positions and running object identification information of the running objects detected in said running object detecting step, and wherein
in said display controlling step, said display control unit receives the running position and running object identification information corresponding to the designated running object and the running positions and running object identification information of the running objects running within the certain distance range from the designated running object, which are transmitted in said transmitting step, and displays the running position of the designated running object and the running positions of the running objects running within the certain distance range from the designated running object.

20. The betting slip reselling method as claimed in claim 17 wherein
in said transmission step, said transmission unit serves to create the image of the running objects corresponding to the running object identification information of the running objects detected in said running object detecting step and the image of the running track on which the running objects are running and transmit the images of the running objects and the image of the running track together with the running positions, or serves to create the image of the running object corresponding to the running object identification information of the running object designated in said running object designating step and the image of the running track on which the running objects are running and transmit the image of this running object and the image of the running track together with the running position, or said transmission unit serves to create the image of the running object corresponding to the running object identification information of the running object designated in said running object designating step and the images of the running objects corresponding to the running object identification information of the running objects running within the certain distance range from the designated running object together with the image of the running track on which the running objects are running, and transmit the images of the running objects and running track together with the respective running positions, and wherein
in said display controlling step, said display control unit serves to display the image of the running track transmitted in said transmitting step on the display unit, and display the images of the running objects in the display positions on the running track corresponding to the running positions of the running objects detected in said running object detecting step, or serves to display the image of the running track transmitted in said transmitting step on the display unit, and display the image of the designated running object in the display position on the running track corresponding to the running position of the running object designated in said running object designating step, or said display control unit serves to display the image of the running track transmitted in said transmitting step on the display unit, and display the images of the running objects in the display positions on the running track corresponding to the running position of the designated running object and the running positions of the running objects running within the certain distance range from the designated running object.

21. The betting slip reselling method as claimed in claim 17 wherein
in said display controlling step, said display control unit serves to create the image of the running track on which the running objects are running, display the image of the running track on the display unit, create the images of the running objects on the basis of the running object identification information of the running objects detected in said running object detecting step, and display the images of the running objects in the display positions on the running track corresponding to the running positions transmitted in said transmitting step, or serves to create the image of the running track on which the running objects are running, display the image of the running track on the display unit, create the image of the designated running object on the basis of the running object identification information of the designated running object transmitted in said transmitting step, and display the image of this running object in the display position on the running track corresponding to the running position transmitted in said transmitting step, or said display control unit serves to create the image of the running track on which the running objects are running, display the image of the running track on the display unit, create the image of the designated running object on the basis of the running object identification information of the designated running object transmitted in said transmitting step and the images of the running objects on the basis of the running object identification information the running objects running within the certain distance range from the designated running object, and display the images of these running objects in the display positions on the running track corresponding to the running positions transmitted in said transmitting step.

22. The betting slip reselling method as claimed in claim 17 wherein
in said displaying step, said running object detecting unit receives the running object identification information, which is transmitted from said transmitter unit attached to the each running object, by a running position detecting unit located in each of the running positions on the running track on which the running objects are running when each of the running objects passes across the each position position, and transmits the running object identification information as received together with the running position information indicative of the running positions.
